# EUROPEAN PATENT APPLICATION

(11) **EP 4 134 890 A1**
(43) Date of publication of application: **15.02.2023**
(21) Application number: 21808741.9
(22) Date of filing: 23.04.2021
(51) Int. Cl.: G06Q 10/10, G06F 13/00, H04M 3/56, H04M 11/00, H04N 7/15

(54) **INFORMATION PROCESSING DEVICE, INFORMATION PROCESSING METHOD, AND PROGRAM**

(30) Priority: 19.05.2020 JP 2020087176; 26.06.2020 JP 2020110871; 17.08.2020 JP 2020137271; 13.10.2020 JP 2020172415; 11.11.2020 JP 2020187756
(71) Applicant: Ovice, Inc., Nachi-shi, Ishikawa 926-0021 (JP)
(72) Inventor: JUNG, Sae Hyung, Nanao-shi, Ishikawa 926-0382 (JP); HASEGAWA, Hirokazu, Kyoto-shi, Kyoto 607-8125 (JP)
(74) Representative: Dr. Schoen, Neymeyr & Partner Patentanwälte mbB
(86) International application number: PCT/JP2021/016458
(87) International publication number: WO 2021/235173

(57) **Abstract**

A positional information management unit 80 specifies a position within a virtual space of icons corresponding to respective users based on an icon positional information. When an instruction operation by a user related to an object arranged in the virtual space is performed, the object conversation management unit 62 acquires an object instruction operation information transmitted from each of the user terminals 2. When an instruction operation of the user regarding the object is not performed, a normal conversation management unit 63 executes various processing related to a normal conversation mode. The communication method determination unit 64 determines a method of communication to be provided to the user and a communication method for realizing the communication. An output information generation unit 65 generates an output information to be output at each of the user terminals.

## Description

### [Technical Field]

The present invention relates to information processing apparatuses, information processing methods, and programs.

### [Background Art]

Heretofore, there have been presented techniques that allow participants to share voices and video images via a network, such as a so-called Web conference system. However, in such a Web conference system, smooth communication is often hindered by a minor communication delay and the like. Therefore, in many cases, the problem to be solved lies in maintaining communication statuses and selecting communication methods.

For example, a technique of enabling selection of a communication method according to a volume of noise acquired from a client is proposed (refer for example to Patent Document 1).

### [Citation List]

### [Patent Document]

[PTL 1] Japanese Patent Application Laid-Open Publication No. 2019-117998

### [Summary of Invention]

### [Technical Problem]

However, the prior art technique disclosed in the above-mentioned Patent Document 1 alone merely enables to select a communication method according to the volume of the noise, and it does not enable selection of a communication method corresponding to types and properties of the conversation. Further, the communication method described in the Patent Document 1 merely provides alternative means such as communicating via text messaging when noise occurs, and it cannot be said that sufficient communication methods are selectable.

In consideration of such circumstances, the present invention aims at providing a communication means among users, the communication means being more convenient and easier to use.

### [Solution to Problem]

In order to achieve the objects mentioned above, an information processing apparatus according to one aspect of the present invention includes:
an information processing apparatus related to a communication system configured to be utilized for communication between a first user and a second user using a virtual space, the apparatus including
a positional information acquisition unit configured to acquire an information related to a position of the first user and the second user in the virtual space as a positional information;
an input information acquisition unit configured to acquire an information related to an instruction operation or an input of the first user or the second user in the virtual space as an input information; and
a communication method determination unit configured to determine a communication method configured to realize the communication based on at least either one of the position information and the input information being acquired.

### [Advantageous Effects of Invention]

The present invention enables to provide a communication means among users, the communication means being more convenient and easier to use.

### [Brief Description of Drawings]

[FIG. 1] FIG. 1 is a block diagram illustrating an example of a configuration of an information processing system according to one embodiment of the present invention.
[FIG. 2] FIG. 2 illustrates an example of a hardware configuration of a server of the information processing system according to FIG. 1.
[FIG. 3] FIG. 3 is a functional block diagram illustrating an example of a functional configuration for executing a communication method determination processing among the functional configurations of a server of FIG. 2 and a user terminal of FIG. 1.
[FIG. 4] FIG. 4 is a schematic explanatory view of a prior art technique related to the information processing system according to one embodiment of the present invention.
[FIG. 5] FIG. 5 illustrates an example of an image displayed to a user via the user terminal of FIG. 3.
[FIG. 6] FIG. 6 illustrates an example of an image displayed to a user via the user terminal of FIG. 3, which differs from the example illustrated in FIG. 5.
[FIG. 7] FIG. 7 is a flowchart illustrating an example of flow of the communication method determination processing among the processing performed in a server having the functional configuration illustrated in FIG. 3.

### [Description of Embodiments]

Now, an embodiment of the present invention will be described with reference to the drawings.

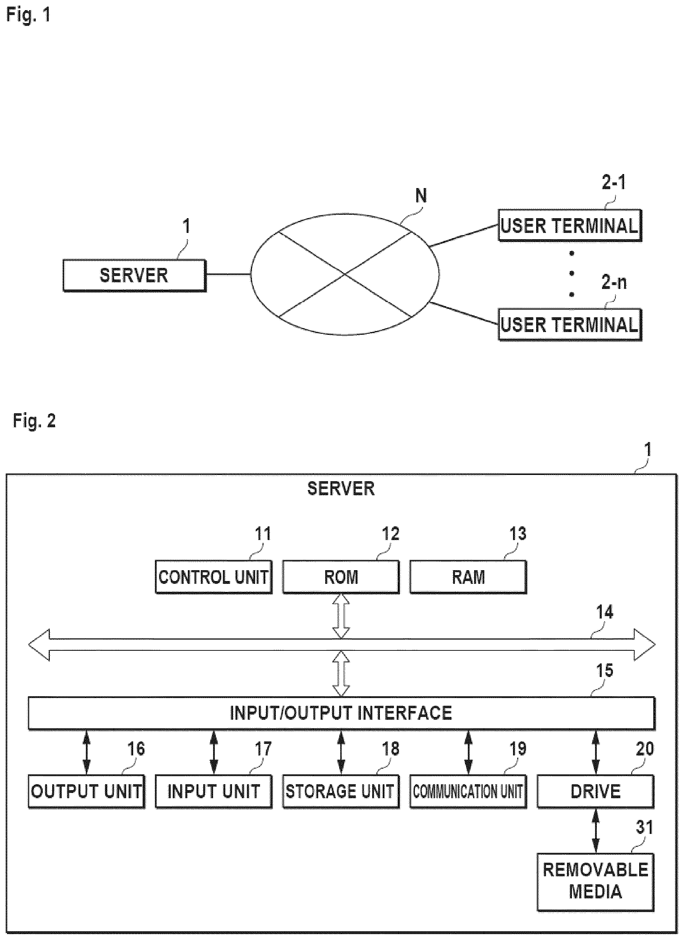

Prior to describing FIG. 1, a service that serves as an application target of an information processing system according to one embodiment of the present invention (hereinafter referred to as "present system") will be briefly described. A service that serves as an application target of the present system will be referred to as a present service in the following description.

The present service is a communication method determination service that determines an appropriate communication method based on a predetermined reference related to a virtual space in a communication service utilizing the virtual space and the like (hereinafter referred to as "Web conference service").

Specifically, for example, the present service enables to determine, based on circumstances and the like within the virtual space, a communication method and communication method that is suitable for the circumstances, and to realize communication by the determined method.

The server according to the present service determines a suitable communication method from a first communication method and a second communication method described below.

The first communication method is a method of transmitting and receiving information via another server. The first communication method transmits and receives information between the server and the user, so that even if communication is performed among a large number of users, increase of communication traffic volume can be suppressed. Meanwhile, the first communication method has a drawback in that delay and the like may occur since the communication is sent via the server. Moreover, according to the first communication method, a server management cost occurs to a service provider.

The second communication method is a method of transmitting and receiving information among users directly communicating with each other via a system such as P2P (Peer to Peer) without being sent via other servers. The second communication method can typically adopt a Web RTC (Web Real Time Communication), for example, that is provided as an open source.

The second communication method enables a stable communication with little delay, especially when communication is performed among a small number of users, since the communication is not transmitted via a server. Further, since the user performs communication directly according to the second communication method, the server management cost of the service provider can be reduced. Meanwhile, if communication among a large number of users is performed by the second communication method, a large load is applied on the user terminal and the overall communication traffic volume is increased.

In conclusion, according to the present service, the suitable communication method and communication method is selected according to the circumstances within the virtual space, to thereby provide an opportunity for optimum communication. Thereby, the user receiving the present service can not only perform various types of communication using the virtual space but also realize the respective communications comfortably in a circumstance having small information delay and failure.

Next, a configuration of the present system will be described with reference to FIG. 1.

FIG. 1 is a block diagram illustrating one example of a configuration of an information processing system according to one embodiment of the present invention.

As illustrated in FIG. 1, the present system is composed of a server 1, and user terminals 2-1 through 2-n (n being an arbitrary integer value of 1 or greater). The server 1 and the user terminals 2-1 through 2-n are mutually connected via a network N such as the Internet. The network N is not an essential component, and for example, a Bluetooth (Registered Trademark), a Wi-Fi, or a LAN (Local Area Network) can be utilized.

In the following description, if the respective user terminals 2-1 through 2-n do not have to be distinguished, they are collectively referred to as a "user terminal 2".

The server 1 is, for example, an information processing apparatus that is managed by a provider of the present service. The server 1 executes various processing described later by communicating as required with each of the user terminals 2 via the network N.

The user terminal 2 is, for example, an information processing terminal operated by a user who wishes to receive the present service. The user terminal 2 can be composed, for example, of a general-purpose smartphone, a tablet, or a personal computer and so on.

FIG. 2 is a block diagram illustrating one example of a hardware configuration of a server in the information processing system according to FIG. 1.

The server 1 includes a control unit 11, a ROM (Read Only Memory) 12, a RAM (Random Access Memory) 13, a bus 14, an input/output interface 15, an output unit 16, an input unit 17, a storage unit 18, a communication unit 19, and a drive 20.

The control unit 11 is composed, for example, of a microcomputer including a CPU, a GPU, and a semiconductor memory, and executes various processing according to programs stored in the ROM 12, or programs loaded to the RAM 13 from the storage unit 18.

The RAM 13 also stores necessary data, etc. for executing the various processing by the control unit 11 as required.

The control unit 11, the ROM 12, and the RAM 13 are mutually connected via the bus 14. The input/output interface 15 is also connected to the bus 14. The output unit 16, the input unit 17, the storage unit 18, the communication unit 19, and the drive 20 are connected to the input/output interface 15.

The output unit 16 is composed of a display, a speaker and so on, and outputs various information as image and audio.

The input unit 17 is composed of a keyboard, a mouse and so on, and various information are entered therethrough.

The storage unit 18 is composed of a hard disk, a DRAM (Dynamic Random Access Memory) and so on, and stores various data.

The communication unit 19 performs communication with another apparatus (for example, the user terminal 2 of FIG. 1) via the network N including the Internet.

The drive 20 is provided as needed. A removable media 31 composed, for example, of a magnetic disk, an optical disk, a magneto-optical disk, or a semiconductor memory is mounted to the drive 20 as required. The program read from the removable media 31 by the drive 20 is installed as needed to the storage unit 18. Further, the removable media 31 can store various data stored in the storage unit 18 in a similar manner as the storage unit 18.

The hardware configuration of the user terminal 2 can be configured basically similarly as the hardware configuration of the server 1, so that the descriptions thereof are omitted.

Execution of various processes by the present system is enabled by cooperation of various hardware and various software constituting the present system, including the server 1 and the user terminal 2.

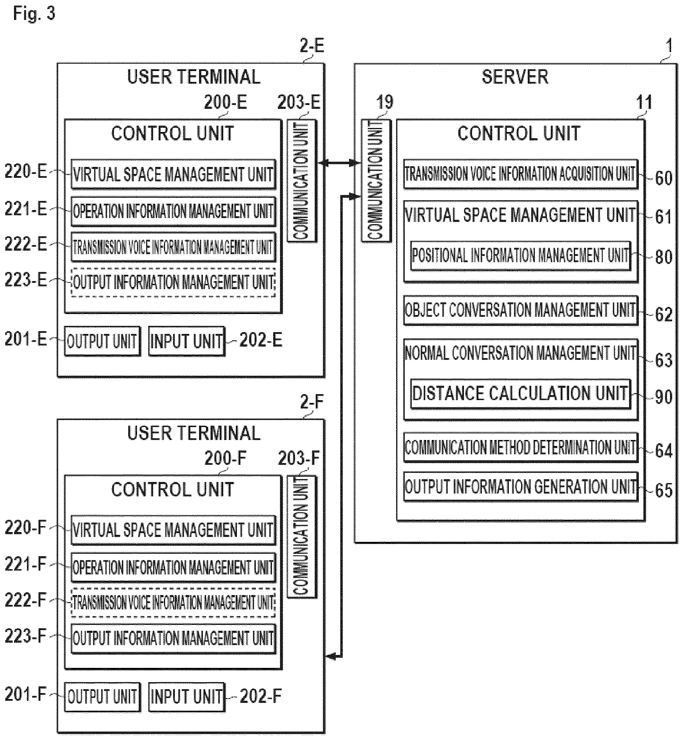

FIG. 3 is a functional block diagram illustrating an example of a functional configuration for executing the communication method determination processing among the functional configurations of the server of FIG. 2 and the user terminal of FIG. 1.

As mentioned earlier, the user terminals 2-1 through 2-n are used by each of the n number of users who wish to send and receive (communicate) voice information. Therefore, each of the user terminals 2-1 through 2-n adopt the functional configuration illustrated in FIG. 3 mentioned earlier, wherein for better understanding, a user terminal 2-E used by a user wishing to transmit an information (hereinafter referred to as a "sender") has an alphabet "E" added to the end of reference numeral of each functional block, and a user terminal 2-F used by a user wishing to receive the information (hereinafter referred to as a "receiver") has an alphabet "F" added to the end of each functional block. Further, in the example of FIG. 3, the dotted line means that the functional block itself is present but that functional block does not function. That is, in the example of FIG. 3, the user terminal 2-E is used only for transmitting voice information, so that an output information management unit 223-E does not function.

As illustrated in FIG. 3, by executing various programs, the control unit 11 of the server 1 functions as a transmission voice information acquisition unit 60, a virtual space management unit 61, an object conversation management unit 62, a normal conversation management unit 63, a communication method determination unit 64, and an output information generation unit 65.

The transmission voice information acquisition unit 60 of the server 1 acquires via the communication unit 19 information related to the voice that the sender wishes to transmit (hereinafter referred to as a "transmission voice information") being transmitted from the user terminal 2-E.

The virtual space management unit 61 generates a virtual space that can be presented to each of the users based on an image information and the like stored in a DB not shown, and transmits the information related to the generated virtual space (hereinafter referred to as a "virtual space information") to each of the user terminal 2-E and the user terminal 2-F. The virtual space information acquired by each of the user terminals 2-E and 2-F is presented to each of the users via a display unit not shown.

Each of the users presented with the virtual space information can arranged an icon corresponding to themselves at an arbitrary position within the virtual space according to the circumstances within the virtual space or the object of communication. The positional information of the respective icons within the virtual space (referred to as an "icon positional information") arranged as described are transmitted from each of the user terminals 2-E and 2-F to the server 1.

Thereby, a positional information management unit 80 of the virtual space management unit 61 acquires the icon positional information of the respective icons transmitted from each of the user terminals 2-E and 2-F via the communication unit 19. The virtual space management unit 61 specifies the positions of respective icons within the virtual space based on the acquired icon positional information.

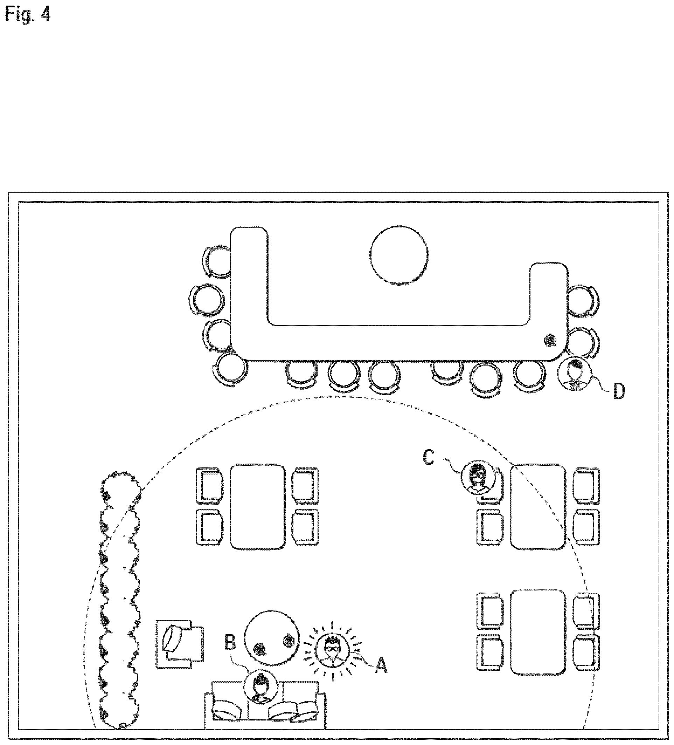

The relationship between the positions of respective icons within the virtual space and various communications will be described later with reference to FIG. 4.

The object conversation management unit 62 acquires information related to an instruction operation or input (hereinafter referred to as an "instruction operation information") in each of the virtual spaces of the users.

That is, the object conversation management unit 62 acquires via the communication unit 19 the instruction operation information transmitted from each of the user terminals 2 including whether the user has performed a click operation to a given object and so on.

Then, the object conversation management unit 62 determines whether the instruction operation to an object has been performed based on the acquired instruction operation information.

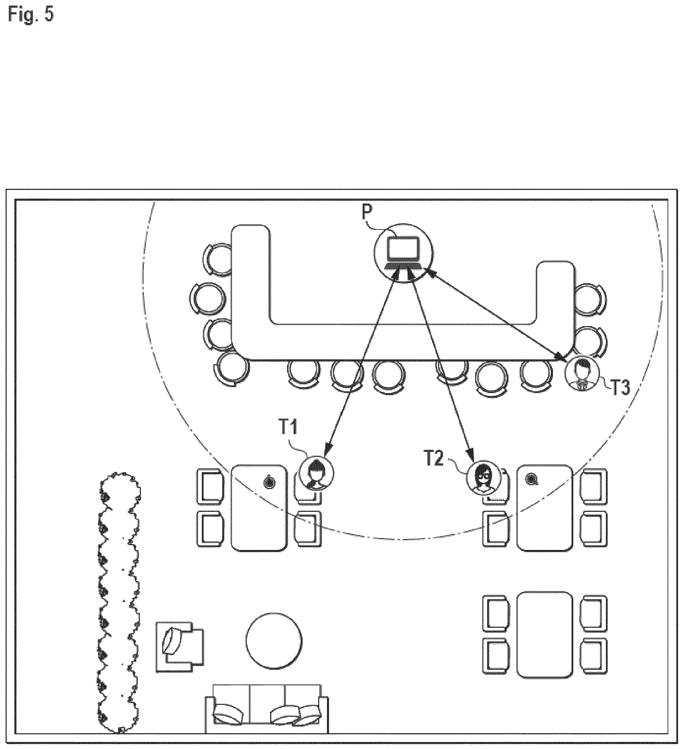

The object refers to an icon designed to resemble a laptop or a projector, for example, in the present service and the Web conference service mentioned above. According to the present embodiment, the object is arranged statically at a predetermined position within the virtual space and used, for example, for switching modes or determining the communication method according to the present system. The details of the object will be described later with reference to FIG. 5, for example.

Further, the object conversation management unit 62 executes various processing related to an object conversation mode and a first communication method for each of the target users in a case where the method of communication is determined to be the "object conversation mode" in the communication method determination unit 64 described later.

The normal conversation management unit 63 executes various processing related to a normal conversation mode and a second communication method for each of the target users in a case where the method of communication is determined to be the "normal conversation mode" in the communication method determination unit 64 described later.

A distance calculation unit 90 calculates distances between respective icons within the virtual space based on the icon positional information acquired by the positional information management unit 80. The distances between the respective icons are used as conditions of correction when generating output information (such as the volume of the voice) by the output information generation unit 65 described later.

The communication method determination unit 64 determines the method of communication to be provided to the user and the communication method for realizing the communication based on the icon positional information acquired by the positional information management unit 80 and the object instruction operation information acquired by the object conversation management unit 62.

Specifically, for example, the communication method determination unit 64 determines either one of the modes of an "object conversation mode" or a "normal conversation mode" as the method of communication to be provided to the target user.

The object conversation mode is, for example, a mode of realizing a conversation by uniformly handling users corresponding to the icons connected via an object. Specifically, for example, the server 1 specifies the user that has performed the instruction operation to the object arranged within the virtual space as the target of communication and connects each of the corresponding user terminals 2 by the first communication method.

Meanwhile, the normal conversation mode is a mode of realizing a conversation by changing the volume and the like of the voice being output based on the distances between the icons corresponding to the users. Specifically, for example, the server 1 specifies the user that does not perform the above-mentioned instruction operation and that corresponds to the icon arranged at an adjacent position within the virtual space as the target of communication, and connects each of the corresponding user terminals 2 by the second communication method. The details of the object conversation mode and the normal conversation mode will be described respectively with reference to the drawings of FIGs. 4 through 6.

The output information generation unit 65 generates the information to be output at each of the user terminals 2 (hereinafter referred to as an "output information") based on the transmission voice information acquired by the transmission voice information acquisition unit 60. Further, the output information generation unit 65 transmits each of the generated output information to each of the user terminals 2.

Next, an example of the functional configuration of the user terminal 2-E will be described.

As illustrated in FIG. 3, by executing various programs and the like, a control unit 200-E of the user terminal 2-E functions as a virtual space management unit 220-E, an operation information management unit 221-E, a transmission voice information management unit 222-E, and an output information management unit 223-E.

The virtual space management unit 220-E of the user terminal 2-E acquires the virtual space information transmitted from the server 1 via a communication unit 203-E. Further, the virtual space management unit 220-E displays the acquired virtual space information on an output unit 201-E.

The operation information management unit 221-E receives the instruction operation information related to the instruction operation or the input operation by the user to which the virtual space information has been presented via the output unit 201-E. Further, the operation information management unit 221-E transmits the received instruction operation information to the server 1.

The transmission voice information management unit 222-E acquires the information related to the voice that the user (sender) wishes to transmit (hereinafter referred to as a "transmission-side voice information"). The transmission voice information management unit 222-E transmits the acquired transmission-side voice information to the server 1.

Now, as mentioned earlier, the user terminals 2-E and 2-F can have similar functional configurations in principle, but in the user terminal 2-E, the output information management unit 223-E does not function. Meanwhile, in the user terminal 2-F, a transmission voice information management unit 222-F does not function but an output information management unit 223-F will function.

Therefore, only the necessary parts of the functional configurations of the user terminal 2-F will be described. The output information management unit 223-F acquires an output information transmitted from the server 1 via a communication unit 203-F. Further, the output information management unit 223-F outputs the acquired output information via an output unit 201-F.

Next, with reference to FIG. 4, an example of a Web conference service related to the present service will be described. FIG. 4 is a schematic explanatory view of a prior art technique related to the information processing system according to one embodiment of the present invention.

FIG. 4 illustrates a virtual space that resembles a conference room of the real world (hereinafter referred to as an "office space"). In the example illustrated in FIG. 4, icons A through D corresponding to each of the users are displayed at predetermined positions in the office space.

According to the Web conference service described above, for example, the volume and the like of the voice being output is adjusted according to the distance between icons in the office space.

In the example of FIG. 4, icon A and icon B are arranged at mutually close positions, whereas icon A and icon C are arranged at relatively distant positions. Icon A and icon D are positioned at even more distant positions.

Therefore, according to the Web conference service described above, the voice entered from a user corresponding to icon "A" will be output by a loud volume at the user terminal 2 of the user corresponding to icon "B" but output by a small volume at the user terminal 2 corresponding to the icon "C", for example.

Further, the dotted line in FIG. 4 illustrates an audible range of the voice of the user corresponding to icon "A", for example. Therefore, the voice of the user corresponding to "A" will not be output at the user terminal 2 of the user corresponding to icon "D".

According to the Web conference service described above, each of the users can move the icon corresponding to themselves freely within the office space by dragging the icon, for example.

Therefore, for example, the user wishing to have a conversation with another user can have a conversation by arranging his/her icon close to the user who he/she wishes to have a conversation with. Meanwhile, if the user wishes to concentrate on his/her job, it may be possible to select a setting that does not allow the voice of other users to be output by intentionally arranging his/her icon at a far distance (out of the audible range) from the other users.

That is, according to the Web conference service mentioned above, each of the users can realize various types of communications, similar to the communication performed in the real world, according to the positions (positional relationships) of their icons within the virtual space by arranging the icons corresponding to themselves at arbitrary positions within the virtual space.

The present service proposes a system and a communication method of optimum communication according to the circumstances within the virtual space, etc. in a Web conference service utilizing such a virtual space.

Next, an object conversation mode according to the present service will be described in detail with reference to FIG. 5.

FIG. 5 is a view illustrating one example of an image displayed to the user via the user terminal of FIG. 3.

In the illustration of FIG. 5, each of icons T1 through T3 are associated with an object P arranged within the virtual space via an arrow. In the example of FIG. 5, each of the users corresponding to each of the icons T1 through T3 wish to have a conversation by the object conversation mode using object P, and a state is illustrated where an instruction operation to the object P has been performed in advance by each of the users.

Therefore, the communication method determination unit 64 of the server 1 determines to carry out a conversation by the object conversation mode targeting the users corresponding to the icons T1 through T3. In the object conversation mode, all the users can have a conversation regardless of the positions of the respective icons. Therefore, the voice entered by an arbitrary sender (for example, the user corresponding to the icon T1) can be output in a same level of volume as the input volume at the user terminals 2 of the other users (such as the users corresponding to icons T2 and T3), regardless of the distance between the respective icons.

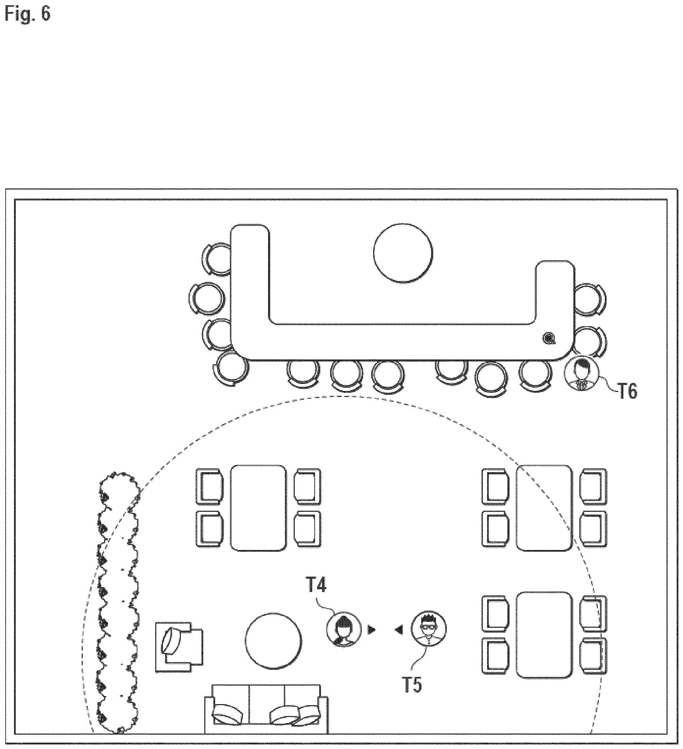

In contrast, in the example illustrated in FIG. 6, each of the icons T4 through T6 are not specifically associated with objects within the virtual space. In such a case, the communication method determination unit 64 of the server 1 determines to perform the conversation using the normal mode targeting the users corresponding to icons T4 through T6.

Specifically, in the example of FIG. 6, the icons T4 and T5 are arranged adjacently within the virtual space, whereas the icon T6 is arranged at a position distant from the other icons. Now, in the example of FIG. 6, the user corresponding to icon T4 is the sender, and the dotted line shown in the drawing indicates the audible range of the conversation. Therefore, in the example of FIG. 6, the voice information entered by the user corresponding to icon T4 will not be output by the user terminal 2 of the user corresponding to icon T6.

One of the important points is that, in the object conversation mode, conversation is made possible regardless of the distance between the icons, so that a state is assumed where conversation among a relatively large number of users is carried out. In contrast, in the normal conversation mode, conversation is performed only among users that correspond to icons arranged at adjacent areas within the virtual space, so that a conversation among relatively small number of users is assumed. Based on such ideas, the communication method determination unit 64 adopts the first communication method in the case of the object conversation mode and adopts the second communication method in the case of the normal conversation mode.

That is, the communication method determination unit 64 proposes an appropriate method of conversation and a communication method accompanying the same in response to a situation assumed from the circumstances of the virtual space in a communication system that utilizes the virtual space and so on. Thereby, the present service enables to realize communication corresponding to the wishes of the user (such as the operation performed in the virtual space) while efficiently reducing delays and failures of information.

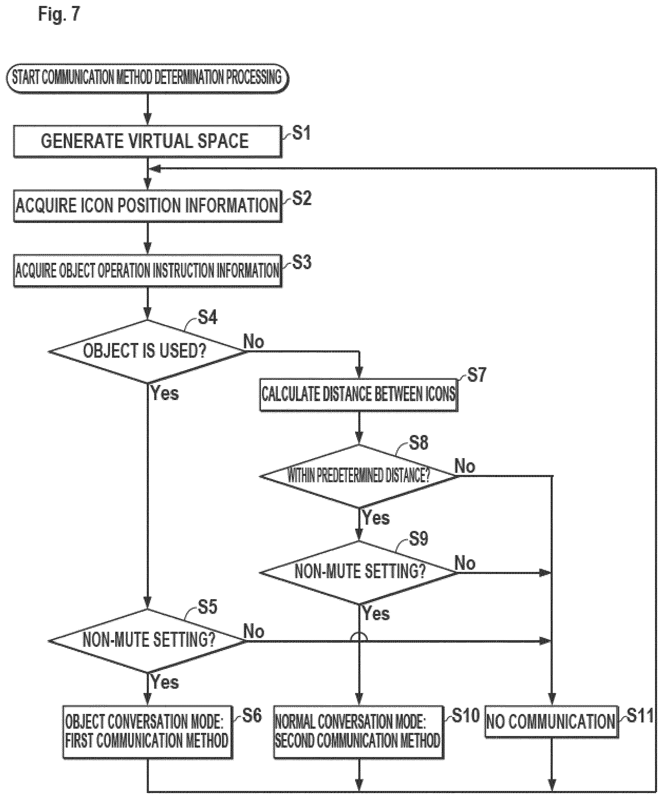

FIG. 7 is a flowchart illustrating an example of a flow of the communication method determination processing among the processing of the server having the functional configuration of FIG. 3.

In step S1, the virtual space management unit 61 generates a virtual space that can be presented to each of the users based on an image information and the like stored in a DB and the like not shown, and transmits the generated virtual space information to each of the user terminal 2-E and the user terminal 2-F.

In step S2, the positional information management unit 80 acquires the icon positional information transmitted from each of the user terminals 2.

Further, in step S2, the virtual space management unit 61 specifies the positions of the icons corresponding to each of the users within the virtual space based on the acquired icon positional information.

In step S3, the object conversation management unit 62 acquires the instruction operation information transmitted from each of the user terminals 2.

In step S4, the object conversation management unit 62 determines whether an instruction operation to a predetermined object has been performed by a user based on the instruction operation information acquired in step S3.

If the object conversation management unit 62 determines that the instruction operation regarding the predetermined object has been performed by the user, Yes is determined in step S4, and the procedure advances to step S5.

In contrast, if the object conversation management unit 62 determines that the instruction operation regarding the predetermined object has not been performed by the user, No is determined in step S4, and the procedure advances to step S7.

In step S5, the object conversation management unit 62 determines whether a setting to shutoff the conversation (hereinafter referred to as a "mute setting" has been performed by the user terminal 2 being the target.

If the object conversation management unit 62 determines that the mute setting has not been performed, Yes is determined in step S5, and the procedure advances to step S6.

In contrast, if the object conversation management unit 62 determines that the mute setting has been performed, the procedure advances from step S5 to step S11.

In step S6, the communication method determination unit 64 determines that an object instruction operation has been performed in step S4, and if it is determined in step S5 that the mute setting has not been selected, the execution of conversation in the object conversation mode utilizing the first communication method is determined. When the process of step S6 has been ended in this manner, the procedure returns to step S2.

The various processing related to the object conversation mode and the first communication method can be executed by the object conversation management unit 62.

In step S7, the distance calculation unit 90 calculates the distance between respective icons based on their positions within the virtual space of the icons corresponding to the respective users specified in step S2.

In step S8, the normal conversation management unit 63 determines whether the respective distances between icons calculated in step S7 are within a predetermined distance (for example, within the audible range).

If it is determined that each of the distances between icons is within a predetermined distance, the normal conversation management unit 63 determines Yes in step S8, and the procedure advances to step S9.

In contrast, if it is determined that the respective distances between icons is not within the predetermined distance, the normal conversation management unit 63 determines No in step S8, and the procedure advances to step S11.

In step S9, the normal conversation management unit 63 determines whether a mute setting has been performed in the target user terminal 2.

If it is determined that the mute setting has not been performed, the normal conversation management unit 63 determines Yes in step S9, and the procedure advances to step S10.

In contrast, if it is determined that the mute setting has been performed, the normal conversation management unit 63 determines No in step S9, and the procedure advances to step S11.

In step S10, if it is determined in step S8 that each of the distances between the icons is within a predetermined distance and it is determined in step S9 that the mute setting has not been performed, the communication method determination unit 64 determines to execute the conversation in the normal conversation mode utilizing the second communication method. As described, when the procedure of step S10 is ended, the procedure is returned to step S2.

The various processing regarding the second communication method and the normal conversation mode can be executed by the normal conversation management unit 63.

In step S11, if it is determined that the various conditions mentioned above is not satisfied in each step, the communication method determination unit 64 determines not to perform communication of each of the user terminals 2. If the process of step S11 is ended, the procedure returns to step S2.

One embodiment of the present invention has been described above, but the present invention is not limited to the above-mentioned embodiment, and various modifications and improvements within the scope for achieving the objects of the present invention are included in the present invention.

Further, for example, the communication is a conversation and the target of information being transmitted and received is voice according to the above-mentioned embodiment, but the present technique is not limited thereto.

That is, the communication can be any other means of communication other than conversation, and the information being transmitted and received is not only limited to voice, but can include various types of information such as text information and image information.

Further, although not described, a concept of a visual field (direction) can be adopted in the various icons described above according to the above-mentioned embodiment (especially the embodiment illustrated in FIG. 6).

Specifically, in the example of FIG. 6, small icons having a triangular shape (hereinafter referred to as a "visual field icon") are displayed in the vicinity of icons T4 and T5. These visual field icons indicate the "visual field (direction)" of the respective icons T4 and T5. In the example of FIG. 6, the visual field icons are directed toward one another, and for example, it can be considered to show a circumstance in which the two users are paying attention to each other and talking with each other face to face, so to say, in the real world. In such a case, for example, in each of the user terminals 2 corresponding to these icons, a large voice can be output mutually. In contrast, if the respective icons are not directed toward one another, a small voice can be output from each of the user terminals 2.

Further, for example, a simplified explanation has been performed for the above-mentioned embodiments (especially the embodiment illustrated in FIG. 5), but the concept of objects will be additionally explained.

Objects are arranged in a fixed manner to arbitrary positions within the virtual space, for example, and they are used to promote the use of contents common to all users. That is, the objects are not only used for realizing conversation among users that have performed the instruction operation (such as clicks), as mentioned in the above-mentioned embodiments (especially the embodiment illustrated in FIG. 5), and for example, they can be objects that can be used for sharing various types of contents, such as playing video images, participating in various games (such as Japanese chess, Othello (registered trademark) (reversi), and werewolf games), sharing of video images (such as camera images or PC images), and displaying of advertisement.

The use of such objects is not only aimed at realizing and appreciating personal use but also at realizing an interactive operation with others. That is, for example, if a game assuming a single player is adopted as the object, the main object is to allow the game to be enjoyed personally. On the other hand, if a game assuming multiple players or a screen to be shared is adopted, the main aim is to realize interactive operation with others.

Thereby, each of the users who receive the service can realize a large variety of communications similar to those realized in the real world.

Further, the objects can include a dynamic object and a static object according to the contents being set.

The dynamic object can be an object whose content being set can be changed frequently, such as a television or a projector. In contrast, the static object can be an object whose content being set is not changed frequently, such as a large signboard or a guide plate. Thereby, the respective users having received the service can realize various types of communication even more similar to those performed in the real world.

Further, for example, in the embodiments described above, the Web conference service was described to adjust the voice and the like being output and to determine various communication methods according to the distances within the virtual space, but the present disclosure is not limited thereto.

That is, the Web conference system having a high relevance with the present system does not require execution of the processing based on the distance within the virtual space, does not require use of icons corresponding to the respective users, and the provider of the present service can be arbitrary.

Further, for example, in the embodiments described above, the communication method determination unit 64 of the server 1 determines the method of conversation (communication) and the communication method based on whether an instruction operation regarding the object exists, but the present technique is not limited thereto.

The communication method determination unit 64 can determine the method of conversation (communication) and the communication method based on an arbitrary reference regarding the circumstances within the virtual space. For example, the communication method determination unit 64 can determine the method of conversation (communication) and the communication method based on the order of the ID to be displayed in the virtual space (or a display space) or the classification of groups.

Further, for example, an engineering method related to a virtual space, such as an AR (Augmented Reality) or a VR (Virtual Reality), can be adopted in the present service and the Web conference service.

Further, according to the present service and the Web conference service, in addition to the icons described in the above-mentioned embodiments, icons indicating a megaphone, a microphone, a door (entrance) and the like can be arranged at arbitrary positions, although not shown.

Specifically, for example, the megaphone is an icon that is used when there is a need to have the voice heard by all users excluding the users in the conference room. The microphone is an icon that is used when the user wishes to switch the mute function of his/her own voice on and off. Further, the door is an icon used when the user exists from the office space S and moves to a lobby (not shown).

Further, for example, the office space is adopted as the virtual space serving as the target of application of the above-mentioned Web conference service or the present system, but the present disclosure is not limited thereto. Any type of virtual space can be adopted. Specifically, for example, various types of virtual spaces, such as an event site, a party room, a restaurant, or a matchmaking party site, can be adopted.

The details of a case in which an event site is adopted as the virtual space being the target of application according to the present service will be additionally explained. Generally, at an event site, a large number of users take arbitrary actions, so that a large variety of communications occur in real time. According to the present service, only an intuitively recognizable UI can reproduce in real time such various types of communications that may occur in real time in the real world.

Further, for example, the system configuration illustrated in FIG. 1 and the hardware configuration of the server 1 illustrated in FIG. 2 are mere examples for achieving the objects of the present invention, and the present disclosure it not specially limited thereto.

Further, for example, the series of processes mentioned above can either be executed by hardware or executed by software.

Further, for example, the number of various hardware (the server 1 and the user terminal 2) constituting the present system and the users thereof can be arbitrary, and the configuration can include other hardware and the like. Furthermore, a single computer and so on can be adopted as the various hardware mentioned above.

Further, for example, when executing the series of processing by software, the program constituting the software is installed to the computer, etc. via the network or a recording medium.

The computer can be a computer assembled to a dedicated hardware.

The computer can further be a computer capable of executing various functions by installing various programs, such as a server, a general-purpose smartphone, or a personal computer.

That is, for example, a portable terminal such as an arbitrary computer or an arbitrary smartphone can be adopted freely as various hardware (the server 1 and the user terminal 2) according to the above-mentioned embodiment. Furthermore, arbitrary combinations can be adopted for the various types and contents of the various input units and various output units and so on.

Moreover, for example, adopting a computer as the various hardware mentioned above is optional, and the present disclosure is not limited thereto.

Further, for example, the storage medium storing these programs is not only composed of a removable medium not shown that is provided independently from the apparatus body for providing programs to the user, but also composed of a storage medium, etc. provided to the user in a state installed in advance to the apparatus body.

In the present specification, the steps describing the program stored in the storage medium not only include processes that are performed in time series according to the illustrated order but also include processes that are performed in parallel or individually in a manner not necessarily performed in time series.

According further to the present specification, the term system refers to an entire apparatus that is composed of a plurality of apparatuses and plurality of units.

Even further, in the flowchart of FIG. 7, the communication can be processed independently at the reception side and at the transmission side, and all or a part of the described processes can be communicated by the reception side and the transmission side only, for example.

In conclusion, the information processing system to which the present invention is applied can take the form of various types of embodiments having the following configuration.

That is, an information processing apparatus to which the present invention is applied relates to:
an information processing apparatus related to a communication system configured to be utilized for communication between a first user and a second user using a virtual space, the information processing apparatus including:
a positional information acquisition unit (for example, the positional information management unit 80) configured to acquire an information related to a position of the first user and the second user in the virtual space as a positional information;
an input information acquisition unit (for example, the transmission voice information acquisition unit 60) configured to acquire an information related to an instruction operation or an input of the first user or the second user in the virtual space as an input information; and
a communication method determination unit (for example, the communication method determination unit 64) configured to determine a communication method configured to realize the communication based on at least one of the position information and the input information being acquired.

Further,
the communication method includes at least
a first communication method configured to include a server to be passed through, and
a second communication method configured not to include the server to be passed through, and
   wherein the communication method determination unit determines a communication method including at least one of the first communication method and the second communication method.

Further,
the input information acquisition unit includes information related to an instruction operation by the first user or the second user regarding a predetermined object arranged within the virtual space.

Further,
the communication method determination unit is configured to determine the communication method by considering an assumed number of the first user or the second user executing the communication.

### [Reference Signs List]

1 Server
11 Control unit
60 Transmission voice information acquisition unit
61 Virtual space management unit
62 Object conversation management unit
63 Normal conversation management unit
64 Communication method determination unit
65 Output information generation unit
80 Positional information management unit
90 Distance calculation unit
2-1 through 2-n User terminal
200-1 through 200-n Control unit
220-1 through 220-n Virtual space management unit
221-1 through 221-n Operation information management unit
222-1 through 222-n Transmission voice information management unit
223-1 through 223-n Output information management unit

### DRAWINGS

FIG. 1
   1: SERVER
   2-1, 2-n: USER TERMINAL
FIG. 2
   SERVER
   11: CONTROL UNIT
   15: INPUT/OUTPUT INTERFACE
   16: OUTPUT UNIT
   17: INPUT UNIT
   18: STORAGE UNIT
   19: COMMUNICATION UNIT
   20: DRIVE
   31: REMOVABLE MEDIA
FIG. 3
   1: SERVER
   11, 200-E, 200-F: CONTROL UNIT
   19, 203-E, 203-F: COMMUNICATION UNIT
   60: TRANSMISSION VOICE INFORMATION ACQUISITION UNIT
   61, 220-E, 220-F: VIRTUAL SPACE MANAGEMENT UNIT
   80: POSITIONAL INFORMATION MANAGEMENT UNIT
   62: OBJECT CONVERSATION MANAGEMENT UNIT
   63: NORMAL CONVERSATION MANAGEMENT UNIT
   90: DISTANCE CALCULATION UNIT
   64: COMMUNICATION METHOD DETERMINATION UNIT
   65: OUTPUT INFORMATION GENERATION UNIT
   2-E, 2-F: USER TERMINAL
   221-E, 221-F: OPERATION INFORMATION MANAGEMENT UNIT
   222-E, 222-F: TRANSMISSION VOICE INFORMATION MANAGEMENT UNIT
   223-E, 223-F: OUTPUT INFORMATION MANAGEMENT UNIT
   201-E, 201-F: OUTPUT UNIT
   202-E, 202-F: INPUT UNIT
FIG. 7
   START COMMUNICATION METHOD DETERMINATION PROCESSING
   S 1: GENERATE VIRTUAL SPACE
   S2: ACQUIRE ICON POSITION INFORMATION
   S3: ACQUIRE OBJECT OPERATION INSTRUCTION INFORMATION
   S4; OBJECT IS USED?
   S5: NON-MUTE SETTING
   S6: OBJECT CONVERSATION MODE: FIRST COMMUNICATION METHOD
   S7: CALCULATE DISTANCE BETWEEN ICONS
   S8: WITHIN PREDETERMINED DISTANCE?
   S9: NON-MUTE SETTING
   S10: NORMAL CONVERSATION MODE: SECOND COMMUNICATION METHOD
   S 11: NO COMMUNICATION

## Claims

1. An information processing apparatus related to a communication system configured to be utilized for communication between a first user and a second user using a virtual space, the information processing apparatus comprising:
a positional information acquisition unit configured to acquire an information related to a position of the first user and the second user in the virtual space as a positional information;
an input information acquisition unit configured to acquire an information related to an instruction operation or an input of the first user or the second user in the virtual space as an input information; and
a communication method determination unit configured to determine a communication method configured to realize the communication based on at least either one of the position information and the input information being acquired.

2. The information processing apparatus according to claim 1,
wherein the communication method comprises at least
a first communication method configured to include a server to be passed through, and
a second communication method configured not to include the server to be passed through, and
wherein the communication method determination unit is configured to determine a communication method comprising at least one of the first communication method and the second communication method.

3. The information processing apparatus according to claim 1 or claim 2,
wherein the input information acquisition unit comprises an information related to an instruction operation by the first user or the second user regarding a predetermined object arranged within the virtual space.

4. The information processing apparatus according to any one of claims 1 through 3,
wherein the communication method determination unit is configured to determine the communication method by considering an assumed number of the first user or the second user executing the communication.

5. An information processing method configured to be executed by a computer related to a communication method of a communication system configured to be utilized for communication between a first user and a second user using a virtual space, the information processing method comprising:
a positional information acquisition step of acquiring a positional information of the first user and the second user in the virtual space;
an input information acquisition step of acquiring an input information entered by the first user or the second user related to a target of the communication; and
a communication method determination step of determining a communication method configured to realize the communication based on at least either one of the position information and the input information being acquired.

6. A program configured to execute a processing by a computer related to a communication method of a communication system configured to be utilized for communication between a first user and a second user using a virtual space, the processing comprising:
a positional information acquisition step of acquiring a positional information of the first user and the second user in the virtual space;
an input information acquisition step of acquiring an input information entered by the first user or the second user related to a target of the communication; and
a communication method determination step of determining a communication method configured to realize the communication based on at least either one of the position information and the input information being acquired.
